# FASCICULE DE BREVET EUROPEEN

(11) **EP 1 669 261 B1**
(45) Date de publication et mention de la délivrance du brevet: **25.02.2009**
(21) Numéro de dépôt: 05292651.6
(22) Date de dépôt: 13.12.2005
(51) Int. Cl.: B60R 21/34

(54) **Capot de véhicule automobile, muni de moyens de protection des piétons contre les chocs**
Kraftfahrzeugmotorhaube, ausgestattet mit Schutzmitteln gegen einen Fussgängeraufprall
Hood of a motor vehicle, equipped with protection means against pedestrian impact

(30) Priorité: 13.12.2004 FR 0413233
(43) Date de publication de la demande: 14.06.2006
(73) Titulaire: COMPAGNIE PLASTIC OMNIUM, 69007 Lyon (FR)
(72) Inventeur: Rocheblave, Laurent, 69100 Villeurbanne (FR); Roux, Jean-Pierre, 69480 Pommiers (FR); Cheron, Hugues, 01800 Meximieux (FR)
(74) Mandataire: Remy, Vincent Noel Paul

(56) Documents cités:
- EP-A- 1 024 063
- EP-A- 1 291 250
- EP-A- 1 300 302
- DE-U1-6202004 001 72
- FR-A- 2 852 900
- US-B1- 6 637 788

## Description

La présente invention concerne un capot de véhicule automobile, muni de moyens de protection des piétons contre les chocs.

Pour protéger un piéton en cas de choc avec un véhicule automobile, Il est connu d'assouplir des zones de ce véhicule susceptibles d'entrer en collision avec la tête de ce piéton, en particulier l'avant du capot, à la jonction entre une peau de pare-chocs et un nez de capot.

Compte-tenu des multiples possibilités en termes d'architecture et de découpage capot/peau de pare-chocs, chacune de ces pièces participe différemment d'un véhicule à l'autre en cas de choc avec la tête.

Ainsi, la conception de moyens permettant d'assouplir la zone avant du capot doit être refaite pour chaque nouveau véhicule.

De plus, selon la taille du piéton, la zone d'impact varie dans des proportions non négligeables, ce qui complexifie encore davantage la conception des moyens d'assouplissement.

Afin de remédier à ces Inconvénients, on connaît déjà, dans l'état de la technique, notamment d'après US 2004/0262894, un dispositif de protection des piétons contre les chocs, comportant un coussin gonflable d'urgence.

Ainsi, la zone d'impact de la tête d'un piéton est couverte par le coussin gonflable déployé, indépendamment de l'emplacement exact de la limite entre peau de pare-chocs et nez de capot, et indépendamment de l'emplacement exact de l'Impact.

Le coussin gonflable d'urgence est logé dans un compartiment agencé à l'avant du véhicule automobile, muni d'une trappe ménagée en avant du capot du véhicule automobile.

Un tel dispositif de protection implique une modification structurelle de la partie avant du véhicule automobile, et nécessite donc des étapes supplémentaires lors de son montage sur la partie avant du véhicule automobile.

De plus, il existe un jeu entre la trappe et le capot qui, dans certains cas, nuit à l'esthétique générale de la partie avant du véhicule automobile. Dans un même soucis d'esthétique, il est important d'assurer une correspondance des couleurs de la trappe et du capot, ce qui peut être difficile puisque cette trappe et ce capot sont colorisés indépendamment l'un de l'autre.

L'invention a notamment pour but de remédier à ces inconvénients en fournissant un capot de véhicule automobile selon la revendication 1.

Ainsi, le capot forme un module comportant la trappe, qui peut être monté sur le véhicule automobile en une seule opération. On économise ainsi des étapes d'adaptation de la trappe sur l'avant du véhicule.

De plus, la trappe étant incluse dans le capot, il est simple de faire disparaître un jeu inesthétique entre cette trappe et le capot et, par ailleurs, cette trappe et ce capot peuvent être colorisés lors d'une même opération, ce qui permet d'assurer la correspondance des couleurs de cette trappe et de ce capot.

De préférence, la trappe est réalisée d'un seul tenant avec une peau du capot. Dans ce cas, la trappe est délimitée par des contours fusibles formés dans la peau du capot, du coté intérieur par rapport au véhicule automobile. Ainsi, la trappe n'est pas, ou est peu, visible sur le capot.

On notera que, par exemple grâce aux contours fusibles, la trappe est susceptible de s'ouvrir sous l'action du coussin gonflable, lorsque celui ci est déployé.

De préférence, le capot comporte des moyens pour retenir la trappe lors de son ouverture. En effet, il est préférable que la trappe reste liée au capot, afin de ne pas être projetée de façon dangereuse lors de son ouverture.

Les moyens pour retenir la trappe comportent par exemple une zone mince de la peau de capot, destinée à se plier sans se rompre lors du déploiement du coussin gonflable. Dans un autre mode de réalisation possible, le capot peut comporter un film charnière ou un cordon solidarisé d'une part à la peau de capot et d'autre part à la trappe.

A défaut, le coussin gonflable peut aussi être logé dans un volume délimité par la doublure de capot et par une pièce portant ou formant la trappe de passage du coussin gonflable.

Dans les deux cas, on retrouve les avantages indiqués précédemment, et notamment le fait que le capot, comportant le ballon gonflable, peut être apporté en tant qu'un seul module sur l'avant du véhicule automobile, réduisant ainsi la chaîne de montage.

L'invention sera mieux comprise à la lecture de la description qui va suivre, donnée uniquement à titre d'exemple et faite en se référant aux dessins annexés dans lesquels :
- la figure 1 est une vue en perspective d'un capot de véhicule automobile selon un premier mode de réalisation de l'invention ;
- la figure 2 est une vue en coupe selon les flèches II-II du capot de la figure 1 ;
- la figure 3 est une vue en coupe selon les flèches III-III du capot de la figure 1 ;
- la figure 4 est une vue similaire à la figure 3 représentant la trappe du capot lorsque le coussin gonflable est déployé ;
- les figures 5 et 6 sont des vues similaires à la figures 3 représentant la trappe du capot selon des deuxième et troisième modes de réalisation de l'invention.

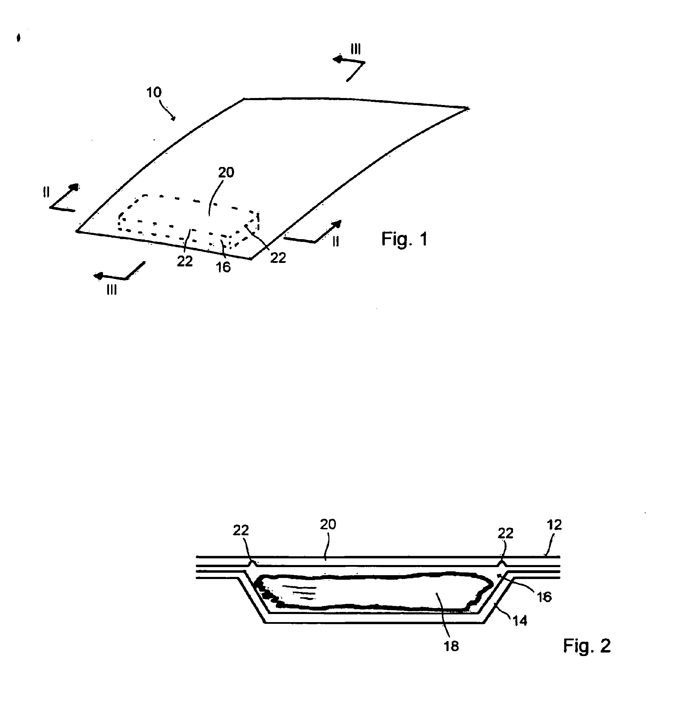

On a représenté sur la figure 1 à 3 un capot avant de véhicule automobile, désigné par la référence générale 10.

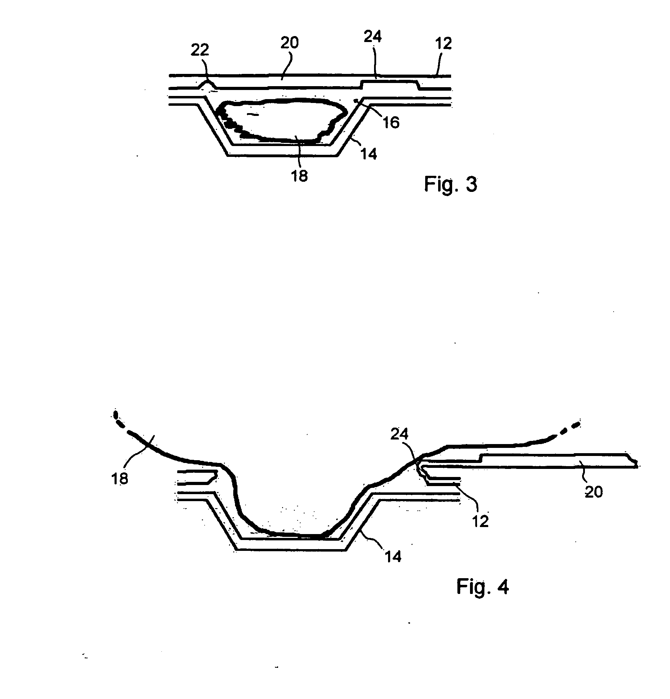

Le capot 10 est muni d'une peau extérieure de capot 12 et d'une doublure 14 (visible sur les figures 2 et 3).

La peau 12 et la doublure 14 forment ensemble, au voisinage du bord frontal 15 du capot 10, une section fermée 16 suivant le contour du capot 10, destinée à accueillir un coussin gonflable d'urgence 18 non déployé.

La section fermée 16 est délimitée par une trappe 20 réalisée d'un seul tenant avec la peau 12 du capot 10. Cette trappe 20 est délimitée par des contours fusibles 22 formés dans la peau 12, destinés à rompre lors du déploiement du coussin gonflable 18.

Généralement, les contours fusibles sont des entailles réalisées du coté intérieur par rapport au véhicule automobile, par exemple lors du moulage de la peau ou ultérieurement.

On notera que ces entailles 22 étant réalisées à l'intérieur de la peau, elles sont généralement sensiblement invisibles du coté extérieur de la peau 12. La trappe 20 est donc sensiblement invisible et ne nuit donc pas à l'esthétique du capot 10.

De préférence, la trappe 20 est délimitée par quatre cotés, dont trois sont formés par les entailles 22 précédemment décrites, et un est formé par une zone mince 24 de la peau 12, destinée à se plier sans se rompre lors du déploiement du coussin gonflable 18. Cette zone mince 24 forme ainsi des moyens pour retenir la trappe 20 lors du déploiement du coussin gonflable 18, empêchant la projection de cette trappe 20 lors de ce déploiement.

On a représenté sur la figure 4 la trappe 20 lors du déploiement du coussin gonflable 18.

Lorsque le véhicule automobile entre en collision avec un piéton, des moyens classiques enclenchent le déploiement du coussin gonflable 18, provoquant une poussée de ce coussin gonflable 18 sur la trappe 20. Les zones fusibles 22 se rompent alors, et la trappe 20 s'ouvre par repliement de la zone mince 24, libérant un passage pour le déploiement du coussin gonflable 18, qui vient alors recouvrir tout le capot 10 afin de protéger le piéton.

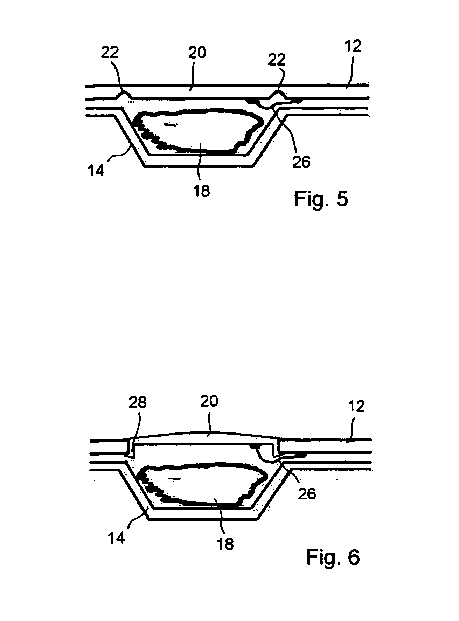

Sur les figures 5 et 6, les éléments analogues à ceux des figures précédentes sont désignés par des références identiques.

Conformément au deuxième mode de réalisation de l'invention, représenté sur la figure 5, les moyens pour retenir la trappe 20 lors du déploiement du coussin gonflable 18 sont formés par un élément de liaison 26, par exemple un film charnière ou un cordon, solidarisé d'une part à la peau 12 et d'autre part à la trappe 20, par exemple par collage ou par soudage.

Cet élément de liaison 26 retient la trappe 20 lors du déploiement du coussin de la même manière que la zone mince 24 du premier mode de réalisation de l'invention.

Conformément au troisième mode de réalisation de l'invention, représenté sur la figure 6, la trappe 20 est formée par un bandeau de style. Ce bandeau de style est encliqueté sur la peau 12 à l'aide de moyens d'encliquetage fusibles 28, destinés à rompre lors du déploiement du coussin gonflable 18.

Dans ce cas, la doublure 14 forme la section fermée 16 avec ce bandeau de style 20.

On notera que, dans ce troisième mode de réalisation, les moyens pour retenir le bandeau 20 lors du déploiement du coussin gonflable 18 sont formés par un élément de liaison 26, de la même manière que dans le deuxième mode de réalisation de l'invention.

On notera enfin que l'invention n'est pas limitée aux modes de réalisation précédemment décrits.

En effet, on pourra imaginer d'autres modes de réalisation de la trappe sans pour autant sortir du cadre de l'invention.

## Revendications

1. Capot (10) de véhicule automobile comportant, au voisinage de son bord frontal (15), une trappe (20) pour le passage d'un coussin gonflable d'urgence (18), **caractérisé en ce qu'**il comporte une peau (12) et une doublure (14) permettant de constituer, avec la peau (12) du capot, une section fermée (16) qui suit le contour du capot, destinée à accueillir le coussin gonflable (18) non déployé.

2. Capot (10) de véhicule automobile selon la revendication 1, comportant un bandeau de style formant la trappe (20), encliqueté sur une peau (12) du capot à l'aide de moyens d'encliquetage fusibles (28).

3. Capot (10) de véhicule automobile selon la revendication 2, comportant une doublure (14) permettant de constituer, avec le bandeau de style (20), une section fermée (16) destinée à accueillir le coussin gonflable (18) non déployé.

4. Capot (10) de véhicule automobile selon la revendication 1, dans lequel la trappe (20) est réalisée d'un seul tenant avec la peau (12) du capot (10).

5. Capot (10) de véhicule automobile selon la revendication 4, dans lequel la trappe (20) est délimitée par des contours fusibles (22) formés dans la peau (12) du capot, du coté intérieur par rapport au véhicule automobile.

6. Capot (10) de véhicule automobile selon l'une quelconque des revendications 1 à 5, dans lequel la trappe (20) est apte à s'ouvrir sous l'action du coussin gonflable (18), lorsque celui ci est déployé.

7. Capot (10) de véhicule automobile selon la revendication 6, comportant des moyens (24, 26) pour retenir la trappe (20) lors de son ouverture.

8. Capot (10) de véhicule automobile selon la revendication 7 prise en combinaison avec la revendication 4 ou 5, dans lequel les moyens pour retenir la trappe (20) comportent une zone mince (24) de la peau (12) de capot, destinée à se plier sans rompre lors du déploiement du coussin gonflable (18).

9. Capot (10) de véhicule automobile selon l'une quelconque des revendications 1 à 7, dans lequel les moyens pour retenir la trappe (20) comportent un élément de liaison (26), choisi parmi un film charnière ou un cordon, solidarisé d'une part à la peau (12) de capot et d'autre part à la trappe (20).

## Claims

1. Automotive vehicle hood (10) comprising, near its front edge (15), a flap (20) for the passage of an emergency airbag (18), **characterised in that** it comprises a skin (12) and a lining (14) to form, with the skin (12) of the hood, a closed section (16) which follows the outline of the hood, designed to accommodate the non-deployed airbag (18).

2. Automotive vehicle hood (10) according to claim 1, comprising a trim strip forming the flap (20), clipped onto a skin (12) of the hood with fusible clipping means (28).

3. Automotive vehicle hood (10) according to claim 2, comprising a lining (14) to form, with the trim strip (20), a closed section (16) designed to accommodate the non-deployed airbag (18).

4. Automotive vehicle hood (10) according to claim 1, in which the flap (20) and the skin (12) of the hood (10) form together a single piece.

5. Automotive vehicle hood (10) according to claim 4, in which the flap (20) is bounded by fusible outlines (22) formed in the skin (12) of the hood, on the inside with respect to the automotive vehicle.

6. Automotive vehicle hood (10) according to any of claims 1 to 5, in which the flap (20) can open under the pressure of the airbag (18), when the latter is deployed.

7. Automotive vehicle hood (10) according to claim 6, comprising means (24, 26) to hold the flap (20) as it opens.

8. Automotive vehicle hood (10) according to claim 7 taken in combination with claim 4 or 5, in which the means to hold the flap (20) comprise a thin area (24) in the skin (12) of the hood, designed to fold back without breaking during deployment of the airbag (18).

9. Automotive vehicle hood (10) according to any of claims 1 to 7, in which the means to hold the flap (20) comprise a link element (26), either a hinge film or a cord, fastened to the skin (12) of the hood at one end and to the flap (20) at the other end.

## Patentansprüche

1. Haube (10) eines Kraftfahrzeugs, umfassend eine Klappe (20) als Durchführung für einen Airbag (18) in der Nähe ihres vorderen Rands (15), **dadurch gekennzeichnet, dass** sie eine Haut (12) und eine Verstärkung (14) umfasst, die es ermöglicht, mit der Haut (12) der Haube einen geschlossenen Abschnitt (16) zu bilden, der dem Umfang der Haube folgt, dazu bestimmt, den nicht entfalteten Airbag (18) aufzunehmen.

2. Haube (10) eines Kraftfahrzeugs nach Anspruch 1, umfassend eine Zierleiste, welche die Klappe (20) bildet, eingerastet auf einer Haut (12) der Haube mit Hilfe von lösbaren Einrastmitteln (28).

3. Haube (10) eines Kraftfahrzeugs nach Anspruch 2, umfassend eine Verstärkung (14), die es ermöglicht, mit der Zierleiste (20) einen geschlossenen Abschnitt (16) zu bilden, dazu bestimmt, den nicht entfalteten Airbag (18) aufzunehmen.

4. Haube (10) eines Kraftfahrzeugs nach Anspruch 1, wobei die Klappe (20) fester Bestandteil der Haut (12) der Haube (10) ist.

5. Haube (10) eines Kraftfahrzeugs nach Anspruch 4, wobei die Klappe (20) durch in der Haut (12) der Haube ausgebildete lösbare Ränder (22) an der Innenseite zum Kraftfahrzeug begrenzt ist.

6. Haube (10) eines Kraftfahrzeugs nach einem der Ansprüche 1 bis 5, wobei sich die Klappe (20) unter Einwirkung des Airbags (18) öffnen kann, wenn sich dieser entfaltet.

7. Haube (10) eines Kraftfahrzeugs nach Anspruch 6, umfassend Mittel (24, 26) zum Halten der Klappe (20) beim Öffnen.

8. Haube (10) eines Kraftfahrzeugs nach Anspruch 7 in Kombination mit Anspruch 4 oder 5, wobei die Mittel zum Halten der Klappe (20) eine dünne Zone (24) der Haut (12) der Haube umfassen, dazu bestimmt, sich beim Entfalten des Airbags (18) zu biegen, ohne zu brechen.

9. Haube (10) eines Kraftfahrzeugs nach einem der Ansprüche 1 bis 7, wobei die Mittel zum Halten der Klappe (20) ein Verbindungselement (26) aus einer Scharnierfolie oder einer Schnur, verbunden an einem Ende mit der Haut (12) der Haube und am anderen Ende mit der Klappe (20), umfassen.
